# EUROPEAN PATENT APPLICATION

(11) **EP 4 647 998 A1**
(43) Date of publication of application: **12.11.2025**
(21) Application number: 25171818.5
(22) Date of filing: 22.04.2025
(51) Int. Cl.: G06Q 30/06, G06F 16/00

(54) **SYSTEM AND METHOD FOR LEVERAGING PRE-TRAINED EMBEDDINGS TO DETECT AND MERGE MERCHANT DATA**

(30) Priority: 10.05.2024 US 202463645404 P
(71) Applicant: Fiserv, Inc., Milwaukee, WI 53203 (US)
(72) Inventor: ZHANG, Zhiqiang, San Ramon (US); TANG, Yi, Fremont (US); JIANG, Xinshu, Sunnyvale (US)
(74) Representative: Haseltine Lake Kempner LLP

(57) **Abstract**

A system including one or more processors and a computer-readable, non-transitory medium including instructions which cause at least one of the one or more processors to obtain merchant data including a plurality of merchants, obtain a set of word embeddings extracted using a large language model, refine the set of word embeddings by executing a machine-learning model using as input the merchant data to obtain a set of merchant embeddings, determine a first cluster of first merchant embeddings and a second cluster of second merchant embeddings within the set of merchant embeddings, determine a first name for the first cluster based on the first embeddings and a second name for the second cluster based on the second embeddings, and merge the first cluster and the second cluster based on a similarity of the first name and the second name to obtain a merged cluster.

## Description

### CROSS-REFERENCE TO RELATED APPLICATIONS

This application claims priority to US Provisional Application No. 63/645,404, filed May 10, 2024, which application is incorporated herein by reference.

### BACKGROUND

Stores of a merchant may be identified in transaction data differently, causing the merchant stores to be incorrectly identified as stores associated with different merchants, causing confusion in identifying parties to a transaction.

### SUMMARY

Various aspects of the disclosure may now be described with regard to certain examples and embodiments, which are intended to illustrate but not limit the disclosure. Although the examples and embodiments described herein may focus on, for the purpose of illustration, specific systems and processes, one of skill in the art may appreciate the examples are illustrative only, and are not intended to be limiting.

Aspects of the present disclosure relate to a system including one or more processors, and a computer-readable, non-transitory medium including instructions which, when executed by the one or more processors, cause at least one of the one or more processors to obtain merchant data including a plurality of merchant identifiers, obtain a set of word embeddings extracted using a large language model, refine the set of word embeddings by executing a machine-learning model using as input the merchant data to obtain a set of merchant embeddings, determine a first cluster of first merchant embeddings and a second cluster of second merchant embeddings within the set of merchant embeddings, determine a first name for the first cluster based on the first embeddings and a second name for the second cluster based on the second embeddings, and merge the first cluster and the second cluster based on a similarity of the first name and the second name to obtain a merged cluster, the merged cluster corresponding to a merchant identifier of the plurality of merchant identifiers.

In some implementations, refining the set of word embeddings includes generating, by the machine-learning model, a predicted category for each word embedding of the set of word embeddings, and refining the set of word embeddings based on a comparison of the predicted category for each word embedding and a corresponding category label in the merchant data. In some implementations, refining the set of word embeddings includes determining a distance between a first merchant embedding and a second merchant embedding, and applying a loss function to reduce a difference between the determined distance and a labeled distance between the first merchant embedding and the second merchant embedding. In some implementations, determining the first name for the first cluster includes determining the first name for the first cluster based on a frequency of words within the first embeddings. In some implementations, determining the first name for the first cluster includes validating the first name based on comparing the first name to a set of merchant names. In some implementations, determining the first name for the first cluster includes determining the set of merchant names based on additional data. In some implementations, the instructions further cause the one or more processors to modify the first name based on a similarity comparison between the first name and a merchant name and the set of merchant names.

Aspects of the present disclosure are directed to a method including obtaining merchant data including a plurality of merchants, obtaining a set of word embeddings extracted using a large language model, refining the set of word embeddings by executing a machine-learning model using as input the merchant data to obtain a set of merchant embeddings, determining a first cluster of first merchant embeddings and a second cluster of second merchant embeddings within the set of merchant embeddings, determining a first name for the first cluster based on the first embeddings and a second name for the second cluster based on the second embeddings, and merging the first cluster and the second cluster based on a similarity of the first name and the second name to obtain a merged cluster.

In some implementations, refining the set of word embeddings includes generating, by the machine-learning model, a predicted category for each word embedding of the set of word embeddings, and refining the set of word embeddings based on a comparison of the predicted category for each word embedding and a corresponding category label in the merchant data. In some implementations, refining the set of word embeddings includes determining a distance between a first merchant embedding and a second merchant embedding, and applying a loss function to reduce a difference between the determined distance and a labeled distance between the first merchant embedding and the second merchant embedding. In some implementations, determining the first name for the first cluster includes determining the first name for the first cluster based on a frequency of words within the first embeddings. In some implementations, determining the first name for the first cluster includes validating the first name based on comparing the first name to a set of merchant names. In some implementations, determining the first name for the first cluster includes determining the set of merchant names based on additional data. In some implementations, the instructions further cause the one or more processors to modify the first name based on a similarity comparison between the first name and a merchant name and the set of merchant names. In some implementations, the method includes modifying the first name based on a similarity comparison between the first name and a merchant name of the set of merchant names.

Aspects of the present disclosure are directed to a computer-readable, non-transitory medium including instructions which, when executed by one or more processors, cause at least one of the one or more processors to obtain merchant data including a plurality of merchants, obtain a set of word embeddings extracted using a large language model, refine the set of word embeddings by executing a machine-learning model using as input the merchant data to obtain a set of merchant embeddings, determine a first cluster of first merchant embeddings and a second cluster of second merchant embeddings within the set of merchant embeddings, determine a first name for the first cluster based on the first embeddings and a second name for the second cluster based on the second embeddings, and merge the first cluster and the second cluster based on a similarity of the first name and the second name to obtain a merged cluster.

In some implementations, refining the set of word embeddings includes generating, by the machine-learning model, a predicted category for each word embedding of the set of word embeddings, and refining the set of word embeddings based on a comparison of the predicted category for each word embedding and a corresponding category label in the merchant data. In some implementations, refining the set of word embeddings includes determining a distance between a first merchant embedding and a second merchant embedding, and applying a loss function to reduce a difference between the determined distance and a labeled distance between the first merchant embedding and the second merchant embedding. In some implementations, determining the first name for the first cluster includes determining the first name for the first cluster based on a frequency of words within the first embeddings. In some implementations, determining the first name for the first cluster includes validating the first name based on comparing the first name to a set of merchant names. In some implementations, determining the first name for the first cluster includes determining the set of merchant names based on additional data. In some implementations, the instructions further cause the one or more processors to modify the first name based on a similarity comparison between the first name and a merchant name and the set of merchant names. In some implementations, the instructions further cause the one or more processors to modify the first name based on a similarity comparison between the first name and a merchant name of the set of merchant names.

The foregoing summary is illustrative only and is not intended to be in any way limiting. In addition to the illustrative aspects, embodiments, and features described above, further aspects, embodiments, and features may become apparent by reference to the following drawings and the detailed description.

### BRIEF DESCRIPTION OF THE DRAWINGS

FIG. 1 is an example block diagram of a system for identifying and aggregating merchant stores in merchant data.
FIG. 2 is an example block diagram illustrating details of the embeddings tuning engine of FIG. 1.
FIG. 3 is an example block diagram illustrating details of the stage-1 fine tuning of FIG. 2.
FIG. 4 is an example block diagram illustrating details of the stage-2 fine tuning of FIG. 2.
FIG. 5 is an example block diagram of a system for clustering merchant data.
FIG. 6 is an example block diagram of a system for generating anchor names.
FIG. 7 is an example block diagram illustrating how the clustering engine of FIG. 5 generates cluster names.
FIG. 8 is an example flow diagram of a method for merging clusters.
FIG. 9 is an example flow diagram of a method for merging clusters and noise data.
FIG. 10 is an example block diagram of a computing system 100.

The foregoing and other features of the present disclosure may become apparent from the following description and appended claims, taken in conjunction with the accompanying drawings. Understanding that these drawings depict only several embodiments in accordance with the disclosure and are therefore, not to be considered limiting of its scope, the disclosure may be described with additional specificity and detail through use of the accompanying drawings.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It may be readily understood that the aspects of the present disclosure, as generally described herein, and illustrated in the figures, may be arranged, substituted, combined, and designed in a wide variety of different configurations, all of which are explicitly contemplated and made part of this disclosure.

Aspects of the present disclosure relate to accurately and automatically identifying and aggregating stores associated with a merchant. Transaction data and store descriptors generally describe stores differently, even if they belong to the same merchant. This can cause confusion when customers review past transactions and try to identify real and fraudulent transactions. For example, if a customer made a purchase at a WALMART store, the customer may be confused by a transaction description which describes the store based on its address. Similarly, attempts to analyze spending habits and trends may be frustrated by inaccurate or incomplete mappings of stores to merchants. The present disclosure provides for using machine-learning models to automatically and accurately identify and aggregate merchant stores. The machine-learning models and processes may leverage pre-trained word embeddings to reduce a cost and complexity of the training process. The pre-trained word embeddings can be refined to more accurately reflect merchant attributes. In this way, existing word embeddings that have been previously trained can be refined and adapted for purposes of identifying and aggregating different stores belonging to the same merchant.

While various examples and embodiments herein discuss aggregating merchant stores, the systems and methods discussed herein are applicable to identifying and aggregating other kinds of data. Leveraging pre-trained word embeddings may be advantageous in identifying and aggregating various kinds of text-based data. In an example, aspects of the present disclosure may be applied to identifying and aggregating data associated with a person across several online accounts.

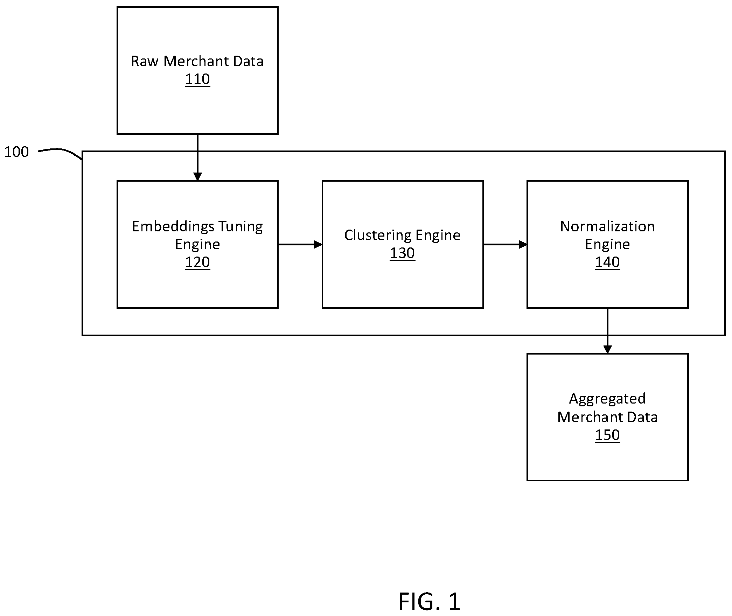

FIG. 1 is an example block diagram of a system 100 for identifying and aggregating merchant stores in merchant data. The system 100 receives as input raw merchant data 110 and outputs aggregated merchant data 150. The aggregated merchant data 150 may be obtained by modifying the raw merchant data 110 using the system 100. The raw merchant data 110 may include merchant stores and merchants. The raw merchant data 110 may include merchant stores which are not associated with their corresponding merchant in the raw merchant data 110 and/or merchant stores which are associated with an incorrect merchant. The raw merchant data 110 may include multiple merchant identifiers which correspond to a single ground truth merchant. Thus, the raw merchant data 110 may inaccurately include more merchants than ground truth. The aggregated merchant data 150 may have the multiple merchant identifiers of the raw merchant data 110 accurately aggregated under a single merchant identifier corresponding to the ground truth merchant.

The system 100 may include an embeddings tuning engine 120, a clustering engine 130, and a normalization engine 140. The embeddings tuning engine 120 may use the raw merchant data to fine-tune previously-trained word embeddings to adapt the word embeddings to the task of identifying and aggregating merchant data. The word embeddings may be previously trained/extracted by a large language model, such as BERT. The word embeddings may be generalized word embeddings trained to represent features of various words. A word embedding for a merchant name may represent extracted features of the merchant name, as extracted by the large language model. The embeddings tuning engine 120 may refine the word embedding for the merchant name to adapt the word embedding for aggregating merchant data while leveraging the previous training of the word embedding. The embeddings tuning engine 120 may allow for transfer learning of the word embedding, with fine-tuning to adapt the word embedding to the merchant data domain. In an example, the embeddings tuning engine 120 fine-tunes a word embedding for the word "Walmart" to obtain a merchant embedding (fine-tuned using merchant data) for the merchant WALMART. In this example, the initial embedding for the word "Walmart" captures multiple features that are useful for aggregating merchant data, and the word embedding is fine-tuned to increase an accuracy of merchant data aggregation. In this way, the process of generating embeddings for merchant names is greatly shortened and simplified relative to generating embeddings from scratch. The embeddings tuning engine 120 may include a multi-stage deep learning model for fine-tuning the word embedding to adapt the word embedding to the merchant domain.

The clustering engine 130 generates clusters of the fine-tuned word embeddings, also referred to as merchant embeddings, or merchant name embeddings, generated by the embeddings tuning engine 120. The clustering engine 130 may include a clustering algorithm. The clustering engine 130 may include a density based clustering algorithm such as Dbscan.

The normalization engine 140 extracts a normalized name for each cluster generated by the clustering engine 130. The normalization engine 140 may generate a normalized name for each cluster based on the merchant embeddings in each cluster. In an example, the normalization engine 140 may generate the normalized name based on a most frequent merchant name in the embeddings in the cluster. The normalization engine 140 may validate the normalized name for the cluster using multiple verification methods. The normalization engine 140 may compare the normalized name for the cluster to a set of anchor names generated based on merchant characteristics, transaction data, the raw merchant data 110, and/or known merchant names. The normalization engine 140 may compare a category of a merchant associated with the normalized name with categories represented in the embeddings in the cluster. In an example, the normalization engine 140 verifies the normalized name by comparing a merchant category code (MCC) associated with a merchant corresponding to the normalized name with a most common MCC represented in the embeddings in the cluster. The normalization may compare a URL associated with a merchant corresponding to the normalized name with a URL from a third-party database which associates URLs with merchant names.

In some implementations, the normalization engine 140 merges clusters based on the normalized names. The normalization engine 140 may merge clusters based on the clusters having a same normalized name, or the clusters having normalized names corresponding to a same merchant. In an example, the normalization engine 140 merges two clusters which each have the normalized name of "Walmart." In an example, the normalization engine 140 merges a first cluster having a normalized name of "Walmart Vision Center" and a second cluster having a normalized name of "Walmart Vision" which both correspond to an anchor name of "Walmart Vision & Glasses." In this example, the anchor name may correspond to an actual merchant name.

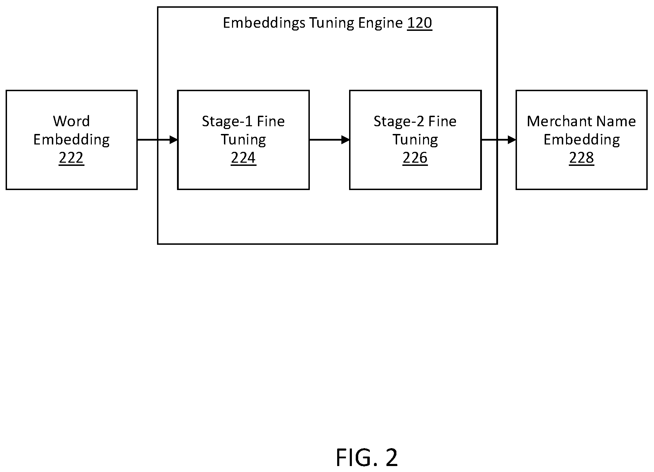

FIG. 2 is an example block diagram illustrating details of the embeddings tuning engine 120 of FIG. 1. The embeddings tuning engine 120 may receive as input a word embedding 222 and output a merchant name embedding 228. The embeddings tuning engine 120 may adapt the word embedding 222 to the merchant domain, refining the word embedding 222 to obtain the merchant name embedding 228. The word embedding 222 may be a pre-trained word embedding, as discussed herein. The word embedding 222 may be a word embedding of a merchant name trained by a generalized large language model. The merchant name embedding 228 may be obtained by refining the word embedding 222 in stage-1 fine tuning 224 and stage-2 fine tuning 226. The embeddings tuning engine 120 may perform the stage-1 fine tuning 224 and the stage-2 fine tuning 226 using one or more deep learning machine-learning models.

The stage-1 fine tuning 224 may encode merchant-specific meaning into each word embedding. The stage-1 fine tuning 224 may use merchant data to encode the merchant-specific meaning into each word embedding. The stage-1 fine tuning 224 may include providing a set of merchant names from a merchant database into a machine-learning model as input and using corresponding merchant categories as a classification task to fine-tune the word embeddings.

The stage-2 fine tuning 226 may include providing training pairs of merchant names to train the machine-learning model used in the stage-1 fine tuning 224 to recognize merchant name patterns and relationships. The stage-2 fine tuning 226 may include determining a distance between merchant names in a training pair and applying a loss function to fine-tune the embeddings. In an example, each training pair includes two merchant names and a labeled similarity score which is compared to a generated similarity score representing a distance between two embeddings generated using the two merchant names. In this example, the embeddings are fine-tuned to correspond to reduce a difference between the predicted distance and the labeled distance.

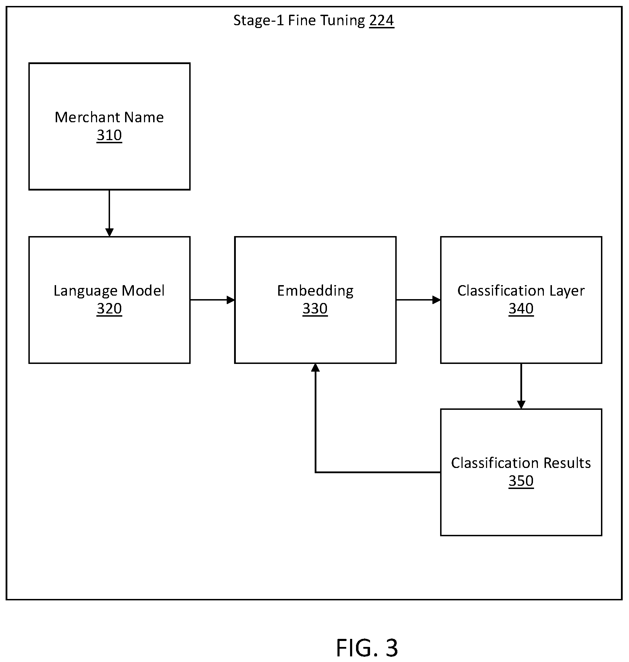

FIG. 3 is an example block diagram illustrating details of the stage-1 fine tuning 224 of FIG. 2. The stage-1 fine tuning 224 may include providing a merchant name 310 to a language model 320 to generate an embedding 330 representing features of the merchant corresponding to the merchant name 310. The embedding 330 may be initialized using the word embedding 222 of FIG. 2. Generating the embedding 330 using the language model may include refining the word embedding 222 of FIG. 2 by executing the language model 320 using as input the merchant name 310. A classification layer 340 may generate classification results 350 using as input the embedding 330. In some implementations, the classification results 350 include a predicted merchant category for the merchant corresponding to the merchant name 310 based on the embedding 330. The predicted merchant category may be compared to a labeled merchant category of the merchant name 310 to update the embedding 330. In an example, the classification layer 340 is executed using as input the embedding 330 and generates a predicted MCC for the merchant name 310 which is compared to a labeled MCC for the merchant name 310. Based on the comparison between the predicted MCC and the labeled MCC, the embedding 330 is updated or refined. In some implementations, the classification results 350 are used to update the language model 320 such that the language model 320 generates the refined embedding when executed using the merchant name 310 as input. In this way, the embedding is refined by refining the language model 320 such that the embedding generated by the language model 320 based on the merchant name 310 reflects the context of the merchant domain. In this way, the stage-1 fine tuning 224 may leverage a pre-trained word embedding and a pre-trained language model, reducing the cost and complexity of generating merchant embeddings. In some implementations, the stage-1 fine tuning 224 is a deep learning model including the classification layer 340.

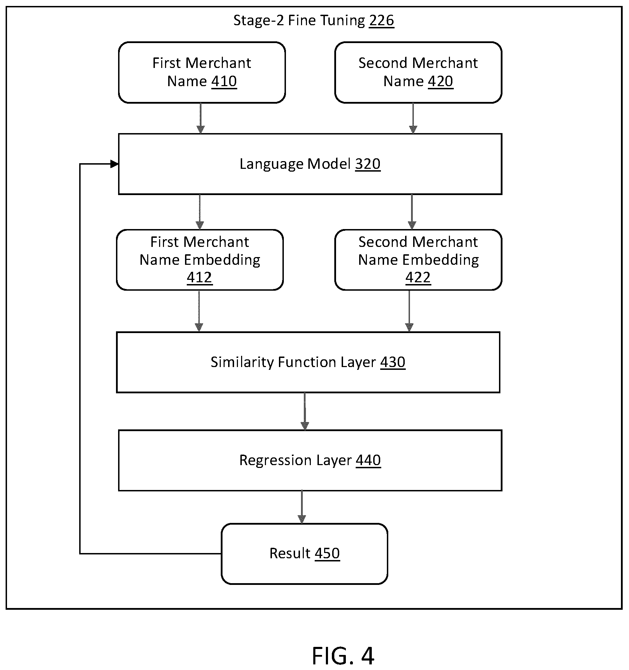

FIG. 4 is an example block diagram illustrating details of the stage-2 fine tuning 226 of FIG. 2. In some implementations, the stage-2 fine tuning 226 may include retrofitting the refined embedding 330 of FIG. 3 to be further adapted to the merchant domain. The stage-2 fine tuning 226 may include providing training pairs to reflect merchant name patterns and relationships. In some implementations, the training pairs each include or are associated with labeled similarity values reflecting a similarity of the training pair or labeled distances reflecting a distance between the training pair. The stage-2 fine tuning 226 may include providing a first merchant name 410 and a second merchant name 420 as input to the language model 320 of FIG. 3 to generate a first merchant name embedding 412 and a second merchant name embedding 422. The first merchant name 410 and the second merchant name 420 may be a training pair. The language model 320 may be updated in the stage-1 fine tuning 224 such that the first merchant name embedding 412 and the second merchant name embedding 422 are refined based on the merchant domain. A similarity function layer 430 receives as input the first merchant name embedding 412 and the second merchant name embedding 422 and determines a distance between the first merchant name embedding 412 and the second merchant name embedding 422. In some implementations, the similarity function layer 430 includes an absolute value distance function and/or a dot product function which calculates a dot product of the first merchant name embedding 412 and the second merchant name embedding 422.

A regression layer 440 may generate a result 450 or similarity score for the first merchant name embedding 412 and the second merchant name embedding 422 based on the distance determined by the similarity function layer 430. In some implementations, the regression layer 440 uses regression loss or a loss function to measure the distance between the first merchant name embedding 412 and the second merchant name embedding 422. The result 450 may be compared to the labeled similarity value or labeled distance of the training pair to update the language model 320. In this way, the language model 320 is updated to reflect the labeled similarity or labeled distance between the first merchant name 410 and the second merchant name 420, further refining the embeddings generated by the language model 320.

In an example, a training pair of "Walmart" and "B-Mart" may have a labeled distance of "10," representing a lack of relationship or similarity. In an example, a training pair of "Walmart" and "Walmart San Jose" may have a labeled distance of "1," representing a strong relationship or similarity. In an example, a training pair of "Walmart" and "Walmart Pharmacy" may have a labeled distance of "2," representing a strong relationship or similarity. In an example, a training pair of "Walmart Vision" and "Walmart Pharmacy" may have a labeled distance of "3," representing a strong relationship or similarity. The language model 320 may be executed using a plurality of training pairs in the stage-2 fine tuning 226. The language model 320 may be updated such that the result 450 approaches and/or matches the labeled similarity values or labeled distances for the plurality of training pairs. In some implementations, a loss function is applied to the language model 320 using the result 450 and the labeled similarity values or labeled distances as input to reduce a difference between the determined distance and the labeled similarity values or labeled distances. In this way, the language model 320 learns relationships and similarities between merchant names in order to understand how different merchant names represent different relationships. For example, the language model 320 may learn that adding a location name to a merchant name signifies that a store belongs to a merchant and is located in the location. In this example, the language model 320 may learn that "Walmart San Jose" is a store associated with the merchant WALMART and is located in San Jose.

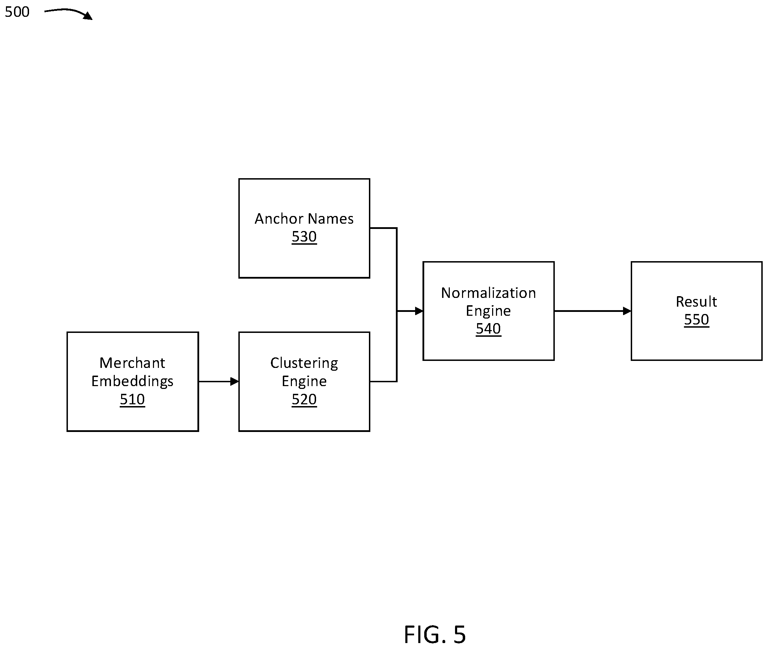

FIG. 5 is an example block diagram of a system 500 for clustering merchant data. The system 500 may include a clustering engine 520 and a normalization engine 540. The clustering engine 520 may be similar to or the same as the clustering engine 130 of FIG. 1. The normalization engine 540 may be similar to, the same as, or part of the normalization engine 140 of FIG. 1.

The clustering engine 520 may receive as input merchant embeddings 510. The merchant embeddings 510 may be the refined merchant embeddings, or merchant name embedding 228 generated by the embeddings tuning engine 120. The clustering engine 520 may be executed using as input the merchant embeddings 510 to generate clusters of embeddings. The clustering engine 520 may cluster the merchant embeddings 510 based on the features represented in the merchant embeddings 510 to cluster similar merchant embeddings 510. The clustering engine 520 determines a standardized name for each cluster of embeddings. The clustering engine 520 may determine the standardized name for a cluster based on the embeddings in the cluster. The clustering engine 520 provides the clusters of embeddings to the normalization engine 540.

The normalization engine 540 may receive as input the clusters of embeddings from the clustering engine 520 and anchor names 530 associated with merchant names to normalize the names of the clusters of embeddings. In some implementations, the anchor names 530 are determined separate from the names of the clusters determined by the clustering engine 520 in order to verify and normalize the names of the clusters. The normalization engine 540 may, based on the normalized names of the clusters, merge one or more clusters of embeddings. A result 550 of the normalization engine 540 may include a set of clusters, including merged clusters, each having a normalized name. The set of clusters may represent relationships or similarities between merchants. In an example, a cluster of embeddings may represent a set of merchants corresponding to a single ground truth merchant. In this way, transactions of the set of merchants can be accurately determined to be associated with the single ground truth merchant.

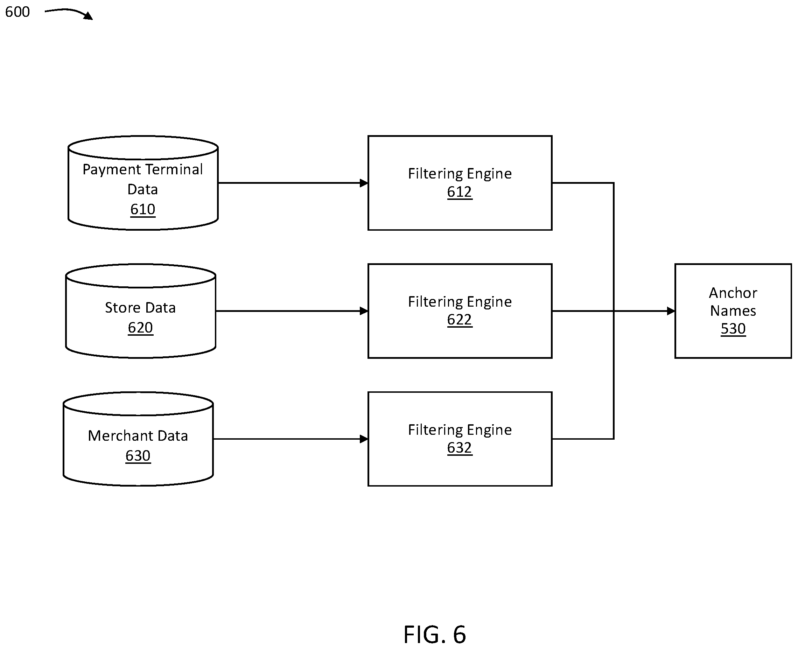

FIG. 6 is an example block diagram of a system 600 for generating anchor names the anchor names 530 of FIG. 5. The system 600 may include a first filtering engine 612 which filters payment terminal data 610. The payment terminal data 610 may include data from payment terminals, such as point-of-sale (POS) devices. The payment terminal data 610 may include merchant names, merchant categories, and terminal counts. In an example, the payment terminal data 610 includes, for each merchant name, a number of payment terminals associated with each merchant category. In an example, the payment terminal data 610 includes a count of payment terminals associated with each MCC for the merchant names "Walmart," "Walmart Supercenter," and "Walmart Store." The first filtering engine 612 may apply knee point filtering to determine a set of names from the payment terminal data 610. In an example, the first filtering engine 612 may identify merchant names having payment terminal counts per merchant category which include a knee and determine that the identified merchant names are valid merchant names. The first filtering engine 612 may output a first set of merchant names.

The system 600 may include a second filtering engine 622 which filters store data 620 received from merchant stores. The store data 620 may include merchant names, merchant domain names, merchant categories, and/or merchant store counts. In an example, the store data 620 includes, for each merchant name, a count of stores associated with each MCC. In an example, the store data 620 includes a chart showing store count per MCC for each of the merchant names of "Walmart," "Walmart Bakery," "Walmart Vision & Glasses," "Walmart Supercenter," "Walmart Distribution Center," "Walmart Neighborhood Market," and "Walmart Grocery Pickup & Delivery." The second filtering engine 622 may apply wrong domain filtering and knee point filtering to the store data 620.

The second filtering engine 622 may apply the wrong domain filtering by comparing a merchant's merchant domain name (e.g., merchant website URL) to the merchant's merchant name to determine whether the merchant domain name from the store data 620 corresponds to the merchant name from the store data 620. In some implementations, the merchant domain name and the merchant name are extracted from a website of the merchant (web-scraped data). In some implementations, comparing the merchant domain name to the store data includes verifying one or more of the merchant domain name and the merchant name. In an example, verifying the merchant domain name may include verifying, using other data, that the merchant domain name is associated with the merchant name.

The second filtering engine 622 may apply the knee point filtering to determine a set of names from the store data 620. In an example, the second filtering engine 622 may identify merchant names having store counts per merchant category which include a knee and determine that the identified merchant names are valid merchant names. In an example, the second filtering engine 622 analyzes charts showing store count per MCC to identify the knee. The second filtering engine 622 may output a second set of merchant names.

The system 600 may include a third filtering engine 632 which filters merchant data 630. The merchant data 630 may include merchant names, merchant domains, and merchant rankings. The merchant data 630 may be obtained from merchant systems and/or from third-party systems. The third filtering engine 632 may apply wrong name filtering and ranking filtering. The third filtering engine 632 may apply the wrong name filtering by comparing the merchant names to the merchant domain, the merchant ranking, and/or additional data associated with the merchant names. The third filtering engine 632 may apply the ranking filtering by comparing the merchant ranking to a ranking of merchants. In an example, third filtering engine 632 compares a size rank of a merchant from the merchant data 630 with a ranking of merchants by size to verify the size rank and the association between the merchant and the size rank. The third filtering engine 632 may output a third set of merchant names.

The anchor names 530 may include the first set of merchant names, the second set of merchant names, and/or the third set of merchant names. In some implementations, the anchor names 530 include merchant names that are present in two or more of the first set of merchant names, the second set of merchant names, and the third set of merchant names. In some implementations, the anchor names 530 include merchant names that are present in each of the first set of merchant names, the second set of merchant names, and the third set of merchant names. In this way, the anchor names 530 include a set of merchant names which are extracted from multiple sources of data to verify that the set of merchant names correspond to ground truth merchants.

In some implementations, the anchor names 530 are determined by the normalization engine 540 of FIG. 5 and the normalization engine 540 includes the system 600. In some implementations, the anchor names 530 are used by the normalization engine 540 of FIG. 5 to generate the result 550 of FIG. 5.

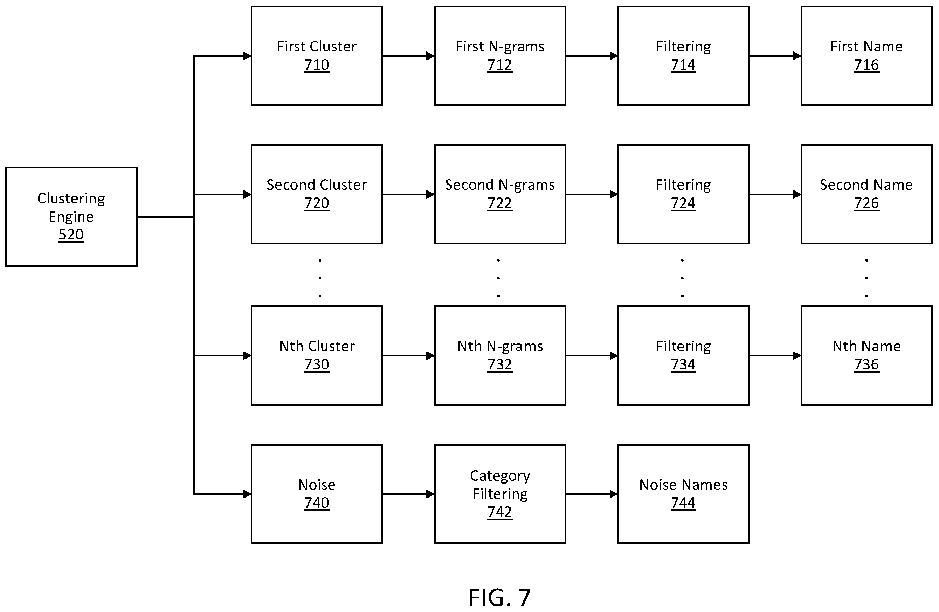

FIG. 7 is an example block diagram illustrating how the clustering engine 520 of FIG. 5 generates cluster names. The clustering engine 520 may take as input merchant embeddings, such as the merchant embeddings 510 of FIG. 5 and generate a plurality of clusters. In an example, the clustering engine 520 utilizes a density-based clustering algorithm such as DBscan to generate the plurality of cluster. The clustering engine 520 may generate a plurality of clusters including a first cluster 710, a second cluster 720, and an nth cluster 730. The clustering engine 520 may generate a noise cluster 740 including embeddings which are not included in the plurality of clusters. The clustering engine 520 may determine a set of n-grams for each cluster in the plurality of clusters. In some implementations, the set of n-grams for each cluster may be word-grams. The clustering engine 520 may perform filtering on the set of n-grams for each cluster to determine a name for each cluster. In some implementations, the filtering includes knee point filtering based on a frequency of n-grams within the set of n-grams.

The clustering engine 520 may determine a set of first n-grams 712 for the first cluster 710 based on the embeddings in the first cluster. In an example, the clustering engine 520 determines that the first cluster 710 includes sixty unique store names. The set of first n-grams 712 may be a set of word grams from the embeddings of the first cluster 710. The clustering engine 520 may perform first filtering 714 on the set of first n-grams 712 to determine a first name 716 for the first cluster 710. The first filtering 714 may include knee point filtering. In an example, the set of first n-grams 712 includes sixty word grams of "walmart," fifty-six word grams of "walmart, vision," fifty-three word grams of "walmart, vision, center," and three word grams of "walmart, vision, and, glasses." In this example, the first filtering 714 may determine that a knee exists at the n-grams of "walmart, vision, center," causing the first name 716 to be "walmart vision center." Thus, the clustering engine 520 may determine the first name 716 for the first cluster 710 based on a frequency of n-grams, a frequency of word-grams, or a frequency of words within the embeddings of the first cluster 710.

Similarly, the clustering engine 520 generates the second cluster 720, extracts a set of second n-grams 722 from the second cluster 720, and applies second filtering 724 to the set of second n-grams 722 to determine a second name 726 for the second cluster 720. Similarly, the clustering engine 520 generates the nth cluster 730, extracts a set of nth n-grams 732 from the nth cluster 730, and applies nth filtering 734 to the set of nth n-grams 732 to determine an nth name 736 for the nth cluster 730.

In some implementations, the first filtering 714, the second filtering 724, and the nth filtering 734 are the same, and/or use the same filtering method (e.g., knee point filtering).

The clustering engine 520 may identify embeddings that are not included in the plurality of clusters as noise belonging to the noise cluster 740. The clustering engine 520 may perform category filtering 742 on the noise cluster 740 to determine noise names 744 for the noise cluster 740. The category filtering may include comparing merchant categories, such as MCCs in the embeddings in the noise cluster 740 to identify a most common category. The noise cluster 740 may include multiple different categories which each receive a different name. In this way, the noise names 744 identify characteristics of the noise.

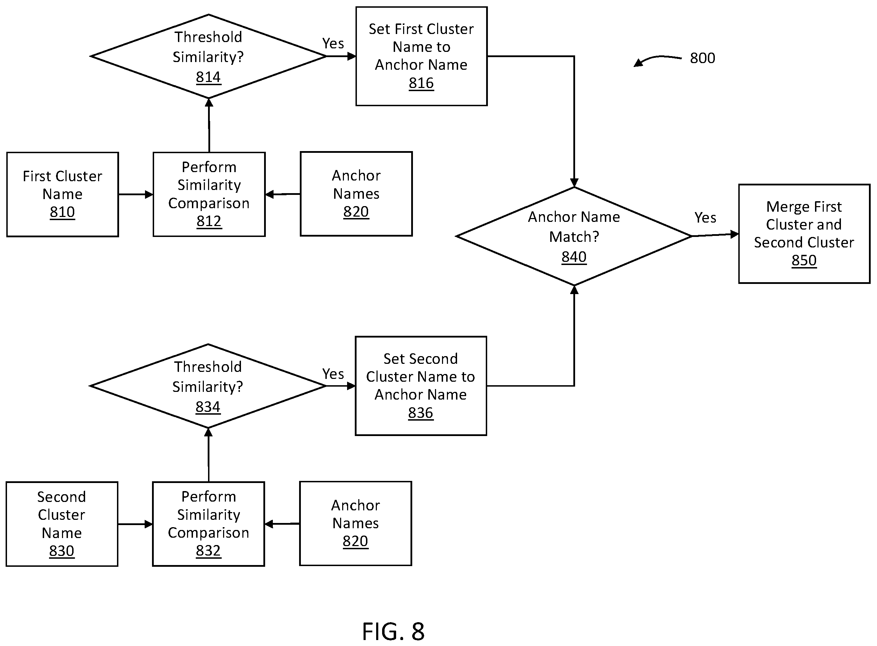

FIG. 8 is an example flow diagram of an example method 800 for merging clusters. The method 800 may include more, fewer, or different operations than illustrated. The operations may be performed in the order shown, in a different order, or concurrently.

At operation 812, a similarity comparison is performed between a first cluster name 810 and a set of anchor names 820. The first cluster name 810 may be a cluster name determined by the clustering engine 520 of FIG. 5. The set of anchor names 820 may be the anchor names 530 of FIG. 5 as determined using the system 600 of FIG. 6. Performing the similarity comparison may include determining a similarity between the first cluster name 810 and each anchor name of the set of anchor names 820. At operation 814, the determined similarities are compared to a threshold similarity to determine whether a similarity between the first cluster name 810 and an anchor name of the set of anchor names 820 exceeds the threshold similarity. In response to a determined similarity between the first cluster name and an anchor name of the set of anchor names 820 exceeding the threshold similarity, the first cluster name 810 is set to the anchor name at operation 816. In an example, the similarity comparison is performed between a cluster name of "walmart vision center" and a set of anchor names including an anchor name of "walmart vision & glasses," causing the cluster name to be set, or changed to "walmart vision & glasses." In this way, the first cluster name 810 is set to be a name (anchor name) extracted from data independent of the embeddings. This allows the clusters to be mapped to real merchant names based on the characteristics of the embeddings in the clusters.

At operation 832, a similarity comparison is performed between a second cluster name 830 and the set of anchor names 820 to determine similarities between the second cluster name 830 and each anchor name of the set of anchor names 820. At operation 834, the determined similarities are compared to a threshold similarity to determine whether a similarity between the second cluster name 830 and an anchor name of the set of anchor names 820 exceeds the threshold similarity. At operation 836, based on a similarity between the second cluster name 830 and an anchor name of the set of anchor names 820 exceeding the threshold similarity, the second cluster name 830 is set to be the anchor name.

At operation 840, the first cluster name 810, set to the corresponding anchor name, and the second cluster name 830, set to the corresponding anchor name, are compared to determine whether the first cluster name 810 and the second cluster name 830 match, or whether the anchor names for each of the first and second clusters match. At operation 850, in response to the cluster names or anchor names matching, the first and second clusters are merged. In some implementations, at operation 840, multiple cluster names of multiple clusters are compared. In an example, a plurality of cluster names are examined at operation 840, causing all clusters with matching names to be merged at operation 850. In some implementations, names of merged clusters are compared to names of clusters at operation 840 and merged clusters and clusters are merged at operation 850 based on matching names. In this way, clusters which are mapped to the same merchants are merged. This allows for accurately and automatically merging merchant identifiers to correspond to real merchants.

Clusters may be merged at various hierarchical levels representing different levels of analysis. In an example, a cluster having a name of "Walmart Bakery" and a cluster having a name of "Walmart Pharmacy" may be separate at a first hierarchical level and merged at a second, higher hierarchical level into a cluster having a name of "Walmart." In this way, a hierarchy of merchant stores may be constructed to show the relationships between different merchants and to accurately and automatically identify merchant stores within the hierarchy of merchant stores. The hierarchy of merchant stores may be used to inform users of spending patterns, inform users of transaction location, and/or to analyze or track spending habits.

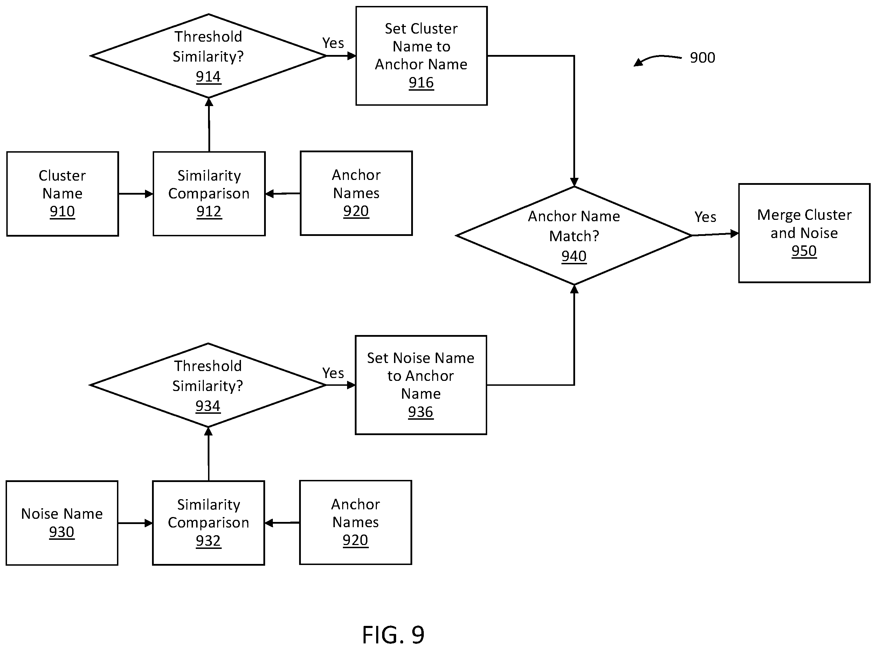

FIG. 9 is an example flow diagram of a method 900 for merging clusters and noise data. The method 900 may include more, fewer, or different operations than illustrated. The operations may be performed in the order shown, in a different order, or concurrently.

At operation 912, a similarity comparison is performed between a cluster name 910 and a set of anchor names 920. The cluster name 910 may be a cluster name determined by the clustering engine 520 of FIG. 5. The set of anchor names 920 may be the anchor names 530 of FIG. 5 as determined using the system 600 of FIG. 6. Performing the similarity comparison may include determining a similarity between the cluster name 910 and each anchor name of the set of anchor names 920. At operation 914, the determined similarities are compared to a threshold similarity to determine whether a similarity between the cluster name 910 and an anchor name of the set of anchor names 920 exceeds the threshold similarity. In response to a determined similarity between the first cluster name and an anchor name of the set of anchor names 920 exceeding the threshold similarity, the cluster name 910 is set to the anchor name at operation 916. In an example, the similarity comparison is performed between a cluster name of "walmart vision center" and a set of anchor names including an anchor name of "walmart vision & glasses," causing the cluster name to be set, or changed to "walmart vision & glasses." In this way, the cluster name 910 is set to be a name (anchor name) extracted from data independent of the embeddings. This allows the clusters to be mapped to real merchant names based on the characteristics of the embeddings in the clusters.

At operation 932, a similarity comparison is performed between a noise name 930 and the set of anchor names 920 to determine similarities between the noise name 930 and each anchor name of the set of anchor names 920. At operation 934, the determined similarities are compared to a threshold similarity to determine whether a similarity between the noise name 930 and an anchor name of the set of anchor names 920 exceeds the threshold similarity. At operation 936, based on a similarity between the noise name 930 and an anchor name of the set of anchor names 920 exceeding the threshold similarity, the noise name 930 is set to be the anchor name.

At operation 940, the cluster name 910, set to the corresponding anchor name, and the noise name 930, set to the corresponding anchor name, are compared to determine whether the cluster name 910 and the noise name 930 match, or whether the anchor names for each of the cluster and the noise match. At operation 950, in response to the cluster names or anchor names matching, the cluster and noise are merged. In some implementations, at operation 940, an anchor name of a merged cluster formed by merging two or more clusters is compared to the noise name 930 to determine whether to merge the merged cluster and the noise at operation 950. In this way, noise, which was not included in a cluster may be rejoined into a cluster based on matching anchor names. This allows for accurately and automatically merging merchant identifiers to correspond to real merchants.

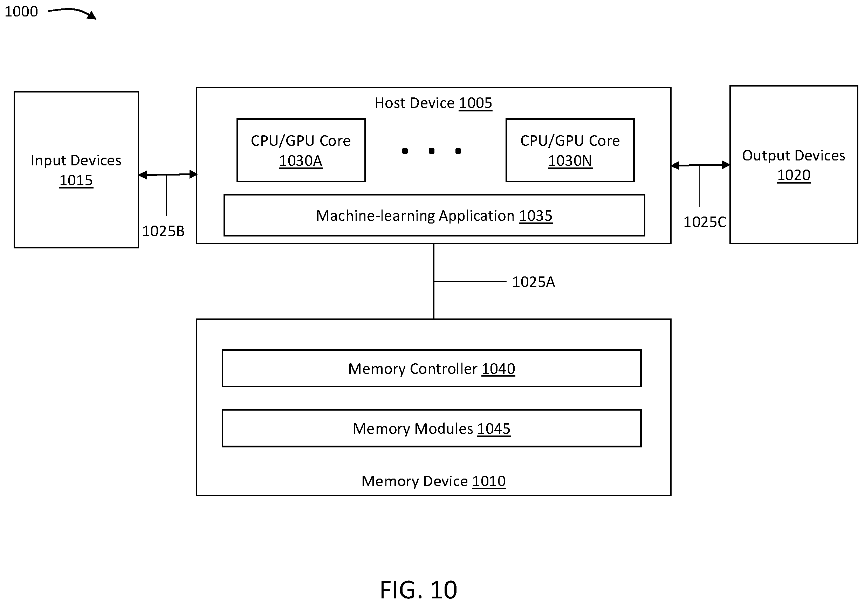

FIG. 10 is an example block diagram of a computing system 1000, in accordance with some embodiments of the present disclosure. The computing system 1000 includes a host device 1005 associated with a memory device 1010. The host device 1005 may be configured to receive input from one or more input devices 1015 and provide output to one or more output devices 1020. The host device 1005 may be configured to communicate with the memory device 1010, the input devices 1015, and the output devices 1020 via appropriate interfaces or channels 1025A, 1025B, and 1025C, respectively. The computing system 1000 may be implemented in a variety of computing devices such as computers (e.g., desktop, laptop, etc.), tablets, personal digital assistants, mobile devices, wearable computing devices such as smart watches, other handheld or portable devices, or any other computing unit suitable for performing operations described herein using the host device 1005.

Further, some or all of the features described in the present disclosure may be implemented on a client device, a server device, or a cloud/distributed computing environment, or a combination thereof. Additionally, unless otherwise indicated, functions described herein as being performed by a computing device (e.g., the computing system 1000) may be implemented by multiple computing devices in a distributed environment, and vice versa.

The input devices 1015 may include any of a variety of input technologies such as a keyboard, stylus, touch screen, mouse, track ball, keypad, microphone, voice recognition, motion recognition, remote controllers, input ports, one or more buttons, dials, joysticks, and any other input peripheral that is associated with the host device 1005 and that allows an external source, such as a user, computer, or database, to enter information (e.g., data) into the host device and send instructions to the host device 1005. Similarly, the output devices 1020 may include a variety of output technologies such as external memories, databases, printers, speakers, displays, microphones, light emitting diodes, headphones, plotters, speech generating devices, video devices, and any other output peripherals that are configured to receive information (e.g., data) from the host device 1005. The "data" that is either input into the host device 1005 and/or output from the host device may include any of a variety of textual data, graphical data, video data, sound data, position data, combinations thereof, or other types of analog and/or digital data that is suitable for processing using the computing system 1000.

The host device 1005 may include one or more Central Processing Unit ("CPU") or Graphics Processing Unit ("GPU") cores or processors 1030A-1030N that may be configured to execute instructions for running one or more applications associated with the host device 1005. In some embodiments, the instructions and data needed to run the one or more applications may be stored within the memory device 1010. The host device 1005 may also be configured to store the results of running the one or more applications within the memory device 1010. One such application on the host device 1005 may include a merchant data aggregation application 1035. The merchant data aggregation application 1035 may be executed by one or more of the CPU/GPU cores 1030A-1030N. The instructions to execute the merchant data aggregation application 1035 may be stored within the memory device 1010. The merchant data aggregation application 1035 is described in greater detail above and may perform functions such as described in FIGS. 1-7 and/or methods such as the method 800 of FIG. 8 and the method 900 of FIG. 9. Thus, the host device 1005 may be configured to request the memory device 1010 to perform a variety of operations. For example, the host device 1005 may request the memory device 1010 to read data, write data, update or delete data, and/or perform management or other operations.

To facilitate communication with the memory device 1010, the memory device 1010 may include or be associated with a memory controller 1040. Although the memory controller 1040 is shown as being part of the memory device 1010, in some embodiments, the memory controller 1040 may instead be part of the host device 1005 or another element of the computing system 1000 and operatively associated with the memory device 1010. The memory controller 1040 may be configured as a logical block or circuitry that receives instructions from the host device 1005 and performs operations in accordance with those instructions. For example, when the execution of the merchant data aggregation application 1035 is desired, the host device 1005 may send a request to the memory controller 1040. The memory controller 1040 may read the instructions associated with the merchant data aggregation application 1035 that are stored within the memory device 1010, and send those instructions back to the host device. In some embodiments, those instructions may be temporarily stored within a memory on the host device 1005. One or more of the CPU/GPU cores 1030A-1030N may then execute those instructions by performing one or more operations called for by those instructions of the merchant data aggregation application 1035.

The memory device 1010 may include one or more memory circuits 1045 that store data and instructions. The memory circuits 1045 may be any of a variety of memory types, including a variety of volatile memories, non-volatile memories, or a combination thereof. For example, in some embodiments, one or more of the memory circuits 1045 or portions thereof may include NAND flash memory cores. In other embodiments, one or more of the memory circuits 1045 or portions thereof may include NOR flash memory cores, Static Random Access Memory (SRAM) cores, Dynamic Random Access Memory (DRAM) cores, Magnetoresistive Random Access Memory (MRAM) cores, Phase Change Memory (PCM) cores, Resistive Random Access Memory (ReRAM) cores, 3D XPoint memory cores, ferroelectric random-access memory (FeRAM) cores, and other types of memory cores that are suitable for use within the memory device 1010. In some embodiments, one or more of the memory circuits 1045 or portions thereof may be configured as other types of storage class memory ("SCM"). Generally speaking, the memory circuits 1045 may include any of a variety of Random Access Memory (RAM), Read-Only Memory (ROM), Programmable ROM (PROM), Erasable PROM (EPROM), Electrically EPROM (EEPROM), hard disk drives, flash drives, memory tapes, cloud memory, or any combination of primary and/or secondary memory that is suitable for performing the operations described herein.

It is to be understood that only some components of the computing system 1000 are shown and described in FIG. 10. However, the computing system 1000 may include other components such as various batteries and power sources, networking interfaces, routers, switches, external memory systems, controllers, etc. Generally speaking, the computing system 1000 may include any of a variety of hardware, software, and/or firmware components that are needed or considered desirable in performing the functions described herein. Similarly, the host device 1005, the input devices 1015, the output devices 1020, and the memory device 1010, including the memory controller 1040 and the memory circuits 1045, may include hardware, software, and/or firmware components that are considered necessary or desirable in performing the functions described herein. In addition, in certain embodiments, the memory device 1010 may integrate some or all of the components of the host device 1005, including, for example, the CPU/GPU cores 1030A-1030N, and the CPU/GPU cores may be configured to execute the merchant data aggregation application 1035, as described herein.

The various illustrative logical blocks, circuits, modules, routines, and algorithm steps described in connection with the embodiments disclosed herein can be implemented as electronic hardware, or combinations of electronic hardware and computer software. To clearly illustrate this interchangeability, various illustrative components, blocks, modules, and steps have been described above generally in terms of their functionality. Whether such functionality is implemented as hardware, or as software that runs on hardware, depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A control processor can synthesize a model for an FPGA. For example, the control processor can synthesize a model for logical programmable gates to implement a tensor array and/or a pixel array. The control channel can synthesize a model to connect the tensor array and/or pixel array on an FPGA, a reconfigurable chip and/or die, and/or the like. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While the above detailed description has shown, described, and pointed out novel features as applied to various embodiments, it can be understood that various omissions, substitutions, and changes in the form and details of the devices or algorithms illustrated can be made without departing from the spirit of the disclosure. As can be recognized, certain embodiments described herein can be embodied within a form that does not provide all of the features and benefits set forth herein, as some features can be used or practiced separately from others.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances, where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

## Claims

1. A system comprising:
one or more processors; and
a computer-readable, non-transitory medium including instructions which, when executed by the one or more processors, cause at least one of the one or more processors to:
obtain merchant data including a plurality of merchants;
obtain a set of word embeddings extracted using a large language model;
refine the set of word embeddings by executing a machine-learning model using as input the merchant data to obtain a set of merchant embeddings;
determine a first cluster of first merchant embeddings and a second cluster of second merchant embeddings within the set of merchant embeddings;
determine a first name for the first cluster based on the first embeddings and a second name for the second cluster based on the second embeddings; and
merge the first cluster and the second cluster based on a similarity of the first name and the second name to obtain a merged cluster.

2. The system of claim 1, wherein refining the set of word embeddings includes:
generating, by the machine-learning model, a predicted category for each word embedding of the set of word embeddings; and
refining the set of word embeddings based on a comparison of the predicted category for each word embedding and a corresponding category label in the merchant data.

3. The system of claim 1 or 2, wherein refining the set of word embeddings includes:
determining a distance between a first merchant embedding and a second merchant embedding; and
applying a loss function to reduce a difference between the determined distance and a labeled distance between the first merchant embedding and the second merchant embedding.

4. The system of any of the preceding claims, wherein determining the first name for the first cluster includes:
determining the first name for the first cluster based on a frequency of words within the first embeddings;
validating the first name based on comparing the first name to a set of merchant names; or
determining the set of merchant names based on additional data.

5. The system of claim 4, wherein:
determining the first name for the first cluster includes determining the set of merchant names based on the additional data; and
the instructions further cause the one or more processors to modify the first name based on a similarity comparison between the first name and a merchant name and the set of merchant names.

6. A method comprising:
obtaining merchant data including a plurality of merchants;
obtaining a set of word embeddings extracted using a large language model;
refining the set of word embeddings by executing a machine-learning model using as input the merchant data to obtain a set of merchant embeddings;
determining a first cluster of first merchant embeddings and a second cluster of second merchant embeddings within the set of merchant embeddings;
determining a first name for the first cluster based on the first embeddings and a second name for the second cluster based on the second embeddings; and
merging the first cluster and the second cluster based on a similarity of the first name and the second name to obtain a merged cluster.

7. The method of claim 6, wherein refining the set of word embeddings includes:
generating, by the machine-learning model, a predicted category for each word embedding of the set of word embeddings; and
refining the set of word embeddings based on a comparison of the predicted category for each word embedding and a corresponding category label in the merchant data.

8. The method of claim 6 or 7, wherein refining the set of word embeddings includes:
determining a distance between a first merchant embedding and a second merchant embedding; and
applying a loss function to reduce a difference between the determined distance and a labeled distance between the first merchant embedding and the second merchant embedding.

9. The method of any of claims 6 to 8, wherein determining the first name for the first cluster includes:
determining the first name for the first cluster based on a frequency of words within the first embeddings;
validating the first name based on comparing the first name to a set of merchant names; or
determining the set of merchant names based on additional data.

10. The method of claim 9, wherein:
determining the first name for the first cluster includes determining the set of merchant names based on the additional data; and
the method further comprises modifying the first name based on a similarity comparison between the first name and a merchant name of the set of merchant names.

11. A computer-readable, non-transitory medium including instructions which, when executed by one or more processors, cause at least one of the one or more processors to:
obtain merchant data including a plurality of merchants;
obtain a set of word embeddings extracted using a large language model;
refine the set of word embeddings by executing a machine-learning model using as input the merchant data to obtain a set of merchant embeddings;
determine a first cluster of first merchant embeddings and a second cluster of second merchant embeddings within the set of merchant embeddings;
determine a first name for the first cluster based on the first embeddings and a second name for the second cluster based on the second embeddings; and
merge the first cluster and the second cluster based on a similarity of the first name and the second name to obtain a merged cluster.

12. The computer-readable, non-transitory medium of claim 11, wherein refining the set of word embeddings includes:
generating, by the machine-learning model, a predicted category for each word embedding of the set of word embeddings; and
refining the set of word embeddings based on a comparison of the predicted category for each word embedding and a corresponding category label in the merchant data.

13. The computer-readable, non-transitory medium of claim 11 or 12, wherein refining the set of word embeddings includes:
determining a distance between a first merchant embedding and a second merchant embedding; and
applying a loss function to reduce a difference between the determined distance and a labeled distance between the first merchant embedding and the second merchant embedding.

14. The computer-readable, non-transitory medium of any of claims 11 to 13, wherein determining the first name for the first cluster includes:
determining the first name for the first cluster based on a frequency of words within the first embeddings;
validating the first name based on comparing the first name to a set of merchant names; or
determining the set of merchant names based on additional data.

15. The computer-readable, non-transitory medium of claim 14, wherein:
determining the first name for the first cluster includes determining the set of merchant names based on the additional data; and
the instructions further cause the one or more processors to modify the first name based on a similarity comparison between the first name and a merchant name of the set of merchant names.
